# EUROPÄISCHE PATENTSCHRIFT

(11) **EP 0 989 763 B1**
(45) Veröffentlichungstag und Bekanntmachung des Hinweises auf die Patenterteilung: **09.05.2007**
(21) Anmeldenummer: 99116799.0
(22) Anmeldetag: 01.09.1999
(51) Int. Cl.: H04Q 7/22

(54) **Verfahren und Mobil-Kommunikationssystem zur Steuerung eines Kurznachrichtendienstes**
Method and mobile communication system to control a short message service
Méthode et système de communication mobile pour gérer un service de messages courts

(30) Priorität: 25.09.1998 DE 19844147
(43) Veröffentlichungstag der Anmeldung: 29.03.2000
(73) Patentinhaber: SIEMENS AKTIENGESELLSCHAFT, 80333 München (DE)
(72) Erfinder: Föll, Uwe, 14612 Falkensee (DE); Maierhöfer, Dietmar, 81241 München (DE); Leitgeb, Manfred, 2440 Gramatneusiedl (AT)

(56) Entgegenhaltungen:
- WO-A-93/18606
- WO-A-97/36434
- WO-A-98/09464
- WO-A-98/28920
- WO-A-98/37685
- D.M.HLAVACEK AND R.J.ZURAWSKI: "Alternative Methods for Introducing New Wireless Intelligent Network Services Using Triggers and Queries" BELL LABS TECHNICAL JOURNAL, 21. Juni 1998 (1998-06-21), Seiten 20-29, XP000703738 NJ,US

## Beschreibung

Die Erfindung betrifft ein Verfahren und ein Mobil-Kommunikationssystem zur Steuerung eines Kurznachrichtendienstes.

Der Kurznachrichtendienst (Short Message Service) ermöglicht einem mobilen Teilnehmer eines Mobilfunknetzes, alphanumerische Nachrichten über sein mobiles Kommunikationsendgerät zu senden und zu empfangen. Jeder mobile Teilnehmer ist üblicherweise in einer Teilnehmerdatenbasis (Heimatregister) seines Heimat-Mobilfunknetzes mit seinen Daten und Diensten registriert, wobei auch für die Inanspruchnahme des Kurznachrichtendienstes eine entsprechende Berechtigungsinformation vorliegen muß. Eine oder mehrere Kurznachrichten werden von dem Kommunikationsendgerät des mobilen Teilnehmer (A-Teilnehmer) in ein Mobilfunknetz gesendet und dort von einer für den mobilen Teilnehmer auf Grund seines momentanen Aufenthaltorts zuständigen Vermittlungseinrichtung empfangen. Das Routing der Kurznachrichten erfolgt im Netz zu einer eigens für den Kurznachrichtendienst vorgesehenen Diensteeinrichtung (Short Message Service Center). Eine Zieladresse (Called Party Number) definiert das Ziel der Kurznachrichten. Dabei kann beispielsweise zwischen einer Zieladresse für ein mobiles Kommunikationsendgerät eines anderen mobilen Teilnehmers (B-Teilnehmers), einer Zieladresse für einen Ansagedienst mit einer Umsetzung von Text in Sprache sowie einer Zieladresse für andere Endgeräte wie Computer oder dergleichen unterschieden werden. Abhängig von der Art des gewünschten Ziels bzw. der Zieladresse muss der mobile Teilnehmer die spezifische Adresse der für den Kurznachrichtendienst jeweils geeigneten Diensteeinrichtung in seinem Kommunikationsendgerät zuvor administrieren. Dies erfordert vom Teilnehmer zum einen die Kenntnis dieser spezifischen Einrichtungsadressen und zum anderen eine umständliche Eingabeprozedur für die Administrierung.

Die WO 98/28920 beschreibt ein Kommunikationsnetz für einen Kurznachrichten-Dienst, das mit einem Intelligenten Netz verbunden ist. Als Antwort zu einer Markierung eines mobilen Nutzers für die Übermittlung von Kurznachrichten (SMS) an eine B-Nummer, bestimmt eine Vermittlungseinheit/Besucher-Orts-Register ob die anrufende oder angerufene Einheit einen IN-Dienst verarbeiten kann. Statt dem direkten Senden der Daten zu einem Kurznachrichten-Dienst-Server (SMS-C) leiten die Vermittlungseinheit/Besucher-Orts-Register in einer ISUP-Nachricht die Daten an ein Intelligentes Netz weiter. Ein Dienstvermittlungs-Knoten (SSP) und ein Dienststeuerungs-knoten (SCP) erledigen dann die Anfrage, wobei der SCP eine transformierte routingfähige B-Nummer an den SSP zurücksendet der dann die SMS an das mit dieser B-Nummer assoziierte SMSC weiterleitet.

Es ist Aufgabe der vorliegenden Erfindung, ein Verfahren und ein Mobil-Kommunikationssystem anzugeben, durch das die Steuerung des Kurznachrichtendienstes vereinfacht werden kann.

Diese Aufgabe wird gemäß der Erfindung durch die Merkmale des Patentanspruchs 1 hinsichtlich des Verfahrens und durch die Merkmale des Patentanspruchs 9 hinsichtlich des Mobil-Kommunikationssystems gelöst. Weiterbildungen der Erfindung sind in den Unteransprüchen angegeben.

Ausgehend davon, daß von einem Kommunikationsendgerät eines mobilen Teilnehmers an eine Zieladresse gerichtete Kurznachrichten in ein Mobilfunknetz gesendet und zu einer für den mobilen Teilnehmer zuständigen Vermittlungseinrichtung geroutet werden, sieht der Gegenstand der Erfindung vor, dass ein Interworking der Vermittlungseinrichtung mit Einrichtungen eines Intelligenten Netzes derart erfolgt, dass eine Dienstevermittlungsstelle die Zieladresse der Kurznachrichten an eine Dienstesteuerungsstelle sendet und die Dienstesteuerungsstelle die Zieladresse auswertet und eine zur Behandlung des Kurznachrichtendienstes vorgesehene Diensteeinrichtung auswählt.

Auf diese Weise wird die Adresse der zur Behandlung des Kurznachrichtendienstes geeigneten Diensteeinrichtung durch die Dienstesteuerungsstelle eines Intelligenten Netzes ausgewählt, d.h. eine Administrierung und Kenntnis der spezifischen Einrichtungsadresse durch den mobilen Teilnehmer braucht nicht stattzufinden. Der Teilnehmer benötigt somit keine - für ihn in der Regel irrelevanten - technischen Informationen zum Versenden von Kurznachrichten. Abhängig von der Auswertung der Zieladresse liefert die Dienstesteuerungsstelle die richtige Adresse der zur Behandlung des Kurznachrichtendienstes geeigneten Diensteeinrichtung, sodass die Dienstevermittlungsstelle anhand der von der Dienstesteuerungsstelle empfangenen ausgewählten Adresse das Routen der Kurznachrichten - beispielsweise zum mobilen Kommunikationsendgerät, zur Ansageeinheit oder zu einem anderen Endgerät - veranlassen kann. Das Versenden von Kurznachrichten ist durch die Erfindung mit Intelligenten Netzfunktionen netzseitig automatisiert.

Gemäß einer Weiterbildung der Erfindung wird von der Dienstesteuerungsstelle eine Adresse zur Kennzeichnung der ausgewählten Diensteeinrichtung an die Dienstevermittlungsstelle rückgesendet, die die Adresse auswertet und das Routen der Kurznachrichten zur ausgewählten Diensteeinrichtung veranlasst. Damit können von der Intelligenten Netzeinrichtung durch die Auswahl und Bereitstellung der spezifischen Adressen prinzipiell beliebige - d.h. sowohl netzinterne als auch netz fremde - Diensteeinrichtungen zur Behandlung des Kurznachrichtendienstes flexibel bestimmt werden.

In vorteilhafter Weise werden die Adressen der zur Behandlung des Kurznachrichtendienstes geeigneten Diensteeinrichtungen gemäß einer vorteilhaften Weiterbildung der Erfindung in einer Liste von der Dienstesteuerungsstelle gespeichert.

Vorzugsweise wird mit der Zieladresse der Kurznachrichten die Adresse einer Diensteeinrichtung mitgesendet und von der Dienstesteuerungsstelle durch die Adresse der von ihr ausgewählten Diensteeinrichtung ersetzt. Dies hat insbesondere dann Vorteile, wenn bei Aufenthalt des Kommunikationsendgeräts in einem anderen Mobilfunknetz als dem Heimat-Mobilfunknetz des mobilen Teilnehmers die mit den Kurznachrichten mitgesandte Adresse einer im Heimat-Mobilfunknetz betriebenen Diensteeinrichtung von der Dienstesteuerungsstelle zur Vergebührung des Kurznachrichtendienstes benutzt wird. Die mitgesandte Adresse muss nicht die Adresse der ausgewählten Diensteeinrichtung sein, wird jedoch zu Vergebührungszwecken von der Dienstesteuerungsstelle herangezogen. Dies bedeutet, dass dem mobilen Teilnehmer, dessen Kurznachrichten über eine netzfremde Diensteeinrichtung versendet werden, die dafür anfallenden - üblicherweise höheren - Gebühren in die Berechnung einfach miteinbezogen werden können.

Als besonders günstig hat sich die Erfindung dann erwiesen, wenn die Zieladresse eine Internetadresse enthält, auf Grund der die Dienstesteuerungsstelle eine Diensteeinrichtung auswählt, durch die die Kurznachrichten in das Internet geroutet werden. Durch die Auswertung der Internetadresse und die Auswahl einer für den Zugriff zum Internet geeigneten Diensteeinrichtung über Intelligente Netzfunktionen können auch Kurznachrichten als E-Mails versendet werden.

Das Mobil-Kommunikationssystem gemäß der Erfindung weist eine Dienstevermittlungsstelle mit Sende- und Empfangsmittel zum Empfangen der Zieladresse der Kurznachrichten von der Vermittlungseinrichtung und zum Senden der Zieladresse an eine Dienstesteuerungsstelle auf. Des Weiteren weist die Dienstesteuerungsstelle Steuermittel zur Auswertung der Zieladresse und zur Auswahl einer für die Behandlung des Kurznachrichtendienstes vorgesehenen Diensteeinrichtung auf.

Die Erfindung wird anhand eines in einer Zeichnung dargestellten Ausführungsbeispiels näher erläutert, die in einem Blockschaltbild Einrichtungen eines Mobil-Kommunikationssystems zur Steuerung des Kurznachrichtendienstes zeigt.

Bei der Steuerung des Kurznachrichtendienstes (Short-Message-Service) werden von einem mobilen Teilnehmer über sein Kommunikationsendgerät MSA - im vorliegenden Beispiel eine Mobilstation - Kurznachrichten SM (Short Messages) generiert und zusammen mit einer Zieladresse CPN (Called Party Number), die das Ziel der Kurznachrichten SM definiert, in das Mobilfunknetz PLMN gesendet. Das Ziel kann in den vorliegenden Beispielen entweder ein Kommunikationsendgerät MSB eines anderen mobilen Teilnehmers - im vorliegenden Beispiel ebenfalls eine Mobilstation - oder eine Ansageeinrichtung VMC (Voice Mail Center) oder ein Personalcomputer PC, der Zugriff zum Internet INTN hat, sein. Die Zieladresse CPN kennzeichnet dabei, ob es sich um die Übertragung von Nachrichten von dem mobilen Endgerät MSA zum mobilen Endgerät MSB oder zur Ansageeinrichtung VMC (Voice Mail Center) oder um die Übertragung eines E-Mails zum Personalcomputer PC handelt. Voraussetzung für das Senden der Kurznachrichten SM ist zum einen eine Berechtigung des mobilen Teilnehmers zur Inanspruchnahme des Kurznachrichtendienstes sowie die Erreichbarkeit der Mobilstation im Mobilfunknetz PLMN. Vom Endgerät MSA kann zusätzlich zu der Zieladresse CPN der Kurznachrichten SM auch optional die Adresse SMSCA einer Diensteeinrichtung (Short Message Service Center) mitgesendet werden, die anhand einer bestimmten Eingabeprozedur vom mobilen Teilnehmer als die zur Behandlung des gewünschten Kurznachrichtendienstes geeignete Einrichtung angesehen wird. Vorzugsweise wird aber auf diese Adresseninformation verzichtet, sodass der Teilnehmer auf eine Administration der Diensteeinrichtung an seinem Endgerät verzichten kann.

Es sei im Beispiel angenommen, daß die Mobilstationen MSA, MSB sich in demselben Mobilfunknetz PLMN (Public Land Mobile Network) aufhalten, das für die mobilen Teilnehmer wegen des aktuellen Aufenthaltorts ihrer Endgeräte das Besucher-Mobilfunknetz und nicht das Heimat-Mobilfunknetz darstellt. Jedes Mobilfunknetz PLMN verfügt über Basisstationen, die zum funktechnischen Teilsystem des Mobilfunknetzes gehören und über eine Luftschnittstelle mit den Mobilstationen kommunizieren. Das funktechnische Teilsystem des Mobilfunknetzes PLMN verfügt darüber hinaus über Basisstationssteuerungen, die funktechnische Steuerungsfunktionen übernehmen und jeweils mit mehreren Basisstationen in Verbindung stehen. Jede Basisstationssteuerung ist über eine Schnittstelle mit zumindest einer Vermittlungseinrichtung MSC (Mobile Switching Center) im Mobilfunknetz PLMN verbunden, in deren Zuständigkeitsbereich auch die Mobilstation MSA fällt. Zur Behandlung des Kurznachrichtendienstes übernimmt die Vermittlungseinrichtung MSC vermittlungstechnische Funktionen, wie beispielsweise das Routen der empfangenen Kurznachrichten SM. Darüber hinaus erkennt sie an den eintreffenden Informationen, dass ein Kurznachrichtendienst auszuführen ist.

Die Vermittlungseinrichtung MSC startet daraufhin ein Interworking mit Einrichtungen eines Intelligenten Netzes (IN, Intelligent Network), die aus einer mit der Vermittlungseinrichtung MSC gekoppelten Dienstevermittlungsstelle SSP (Service Switching Point) und einer an die Dienstevermittlungsstelle SSP angeschlossenen Dienstesteuerungsstelle SCP (Service Control Point) bestehen. Dabei weisen sowohl die Dienstevermittlungsstelle SSP als auch die Dienstesteuerungsstelle SCP eine Sende- und Empfangseinheit TRM sowie eine Steuereinheit CM auf. Die Dienstevermittlungsstelle SSP empfängt die Zieladresse CPN und leitet sie in einer Nachricht IDP (Initial Detection Point) unmittelbar an die Dienstevermittlungsstelle SSP weiter. Die Nachricht IDP (Initial Detection Point) gehört zu einem IN-Signalisierungsprotokoll (Intelligent Network Application Part). Für den Fall, dass eine Adresse SMSCA vorliegt, wird in der Nachricht IDP auch diese Adresseninformation mitübertragen. Die Steuereinheit CM der Dienstesteuerungsstelle SCP wertet die empfangene Zieladresse CPN aus und wählt eine zur Behandlung des Kurznachrichtendienstes geeignete Diensteeinrichtung aus.

Die Auswahl der jeweiligen Diensteeinrichtung hängt in den vorliegenden Beispielen von der Art der Zieladresse, d.h. der gewünschten Nachrichtenübertragung, ab. Erkennt die Dienstesteuerungsstelle SCP, dass eine Verbindung zu dem mobilen Teilnehmer mit dem Kommunikationsendgerät MSB aufzubauen ist, legt sie beispielsweise eine Diensteeinrichtung SMSC0 zum Versenden der Kurznachrichten SM fest. Die zur Kennzeichnung dieser Diensteeinrichtung SMSC0 gehörige Adresse ASMSC0 wird von der Steuereinheit CM der Dienstesteuerungsstelle SCP aus einer Adressenliste LAD ausgelesen und in eine Nachricht CON (Connect) gemäß dem IN-Signalisierungsprotokoll eingefügt. Diese Nachricht CON wird von der Sende- und Empfangseinheit TRM der Dienstesteuerungsstelle SCP an die Dienstevermittlungsstelle SSP rückgesendet und von der dortigen Sende- und Empfangseinheit TRM empfangen. Für den Fall, dass die Adresse SMSCA vorliegt, wird diese von der Steuereinheit CM der Dienstevermittlungsungsstelle SSP durch die Adresse ASMSC0 ersetzt. Anhand der Adresse ASMSC0 legt die Dienstevermittlungsstelle SSP das Routen der Kurznachrichten SM zu der ausgewählten Diensteeinrichtung SMSC0 fest. Die spezifische Diensteeinrichtung SMSC0 speichert die eintreffenden Kurznachrichten SM zwischen, bevor sie über die zuständige Basisstation des funktechnischen Teilsystems an das Kommunikationsendgerät MSB des mobilen Teilnehmers weitergesendet werden.

Da die Kurznachrichten SM von dem Kommunikationsendgerät MSA außerhalb des Heimat-Mobilfunknetzes gesendet werden, kann die Adresse SMSCA der ursprünglich für die Dienstebehandlung gewünschten Diensteeinrichtung von der Steuereinheit CM der Dienstesteuerungsstelle SCP in vorteilhafter zur Vergebührung des Kurznachrichtendienstes über eine IN-Funktion benutzt werden. In dem obigen Fall ist von dem mobilen Teilnehmer für die Zustellung der Kurznachrichten eine höhere Gebühr zu entrichten

In einem anderen Fall erkennt die Dienstesteuerungsstelle SCP an der eintreffenden Zieladresse CPN, dass die Kurznachrichten SM vom Kommunikationsendgerät MSA mit einer Internetadresse, d.h. einer E-Mail, gesendet werden. Daher legt sie beispielsweise eine Diensteeinrichtung SMSC1 fest, die zum Versenden der Kurznachrichten SM in das Internet INTN geeignet und vorgesehen ist. Die zur Kennzeichnung dieser Diensteeinrichtung SMSC1 gehörige Adresse ASMSC1 wird von der Steuereinheit CM der Dienstesteuerungsstelle SCP wiederum aus der Adressenliste LAD ausgelesen und in die Nachricht CON (Connect) gemäß dem IN-Signalisierungsprotokoll eingefügt. Anhand der von der Dienstesteuerungsstelle SCP empfangenen Adresse ASMSC1 veranlasst die Dienstevermittlungsstelle SSP das Routen der Kurznachrichten SM zu der ausgewählten Diensteeinrichtung SMSC1. Die spezifische Diensteeinrichtung SMSC1 speichert die eintreffenden Kurznachrichten SM zwischen, bevor sie sie als E-Mail über eine Schnittstelle zu dem Personalcomputer PC weiterleitet.

In einem anderen Fall sendet das Kommunikationsendgerät MSA eine Kurznachricht SM im Besucher-Mobilfunknetz PLMN mit der Adresse SMSCA, die eine in seinem Heimat-Mobilfunknetz betriebene Diensteeinrichtung zur Behandlung des Kurznachrichtendienstes identifiziert. Es sei angenommen, dass eine Zugehörigkeit beider Mobilfunknetze zu einem Mobilfunknetzkonsortium - z.B. zwischen dem D1-Netz in Deutschland (Heimat-Mobilfunknetz) und dem MAXmobil-Netz (Besucher-Mobilfunknetz) in Österreich - besteht. Für diesen Fall wird von der Dienstesteuerungsstelle SCP die in der Nachricht IDP empfangene Adresse SMSCA in eine Adresse einer Diensteeinrichtung des Mobilfunknetzes PLMN umgesetzt, im vorliegenden Beispiel in die Adresse ASMSC0 der Diensteeinrichtung SMSC0. Die Kurznachricht SM wird optimal geroutet.

Gemäß einem weiteren Ausführungsbeispiel erkennt die Dienstesteuerungsstelle SCP an der eintreffenden Zieladresse CPN, dass die Kurznachrichten SM vom Kommunikationsendgerät MSA an eine Ansageeinrichtung zur Umsetzung von Text in Sprache gerichtet sind. Daher legt die Dienstesteuerungsstelle SCP beispielsweise eine Diensteeinrichtung SMSC2 fest, die zum Routen der Kurznachrichten SM zu der Ansageeinrichtung VMC geeignet und vorgesehen ist. Die zur Kennzeichnung dieser Diensteeinrichtung SMSC2 gehörige Adresse ASMSC2 wird von der Steuereinheit CM der Dienstesteuerungsstelle SCP wiederum aus der Adressenliste LAD ausgelesen und in die Nachricht CON gemäß dem IN-Signalisierungsprotokoll eingefügt. Diese Nachricht CON wird von der Sende- und Empfangseinheit TRM der Dienstesteuerungsstelle SCP an die Dienstevermittlungsstelle SSP rückgesendet und von der dortigen Sende- und Empfangseinheit TRM empfangen. Anhand der eintreffenden Adresse ASMSC2 legt die Dienstevermittlungsstelle SSP das Routen der Kurznachrichten SM zu der ausgewählten Diensteeinrichtung SMSC2 fest, die die Verbindung zur Ansageeinrichtung VMC aufbaut.

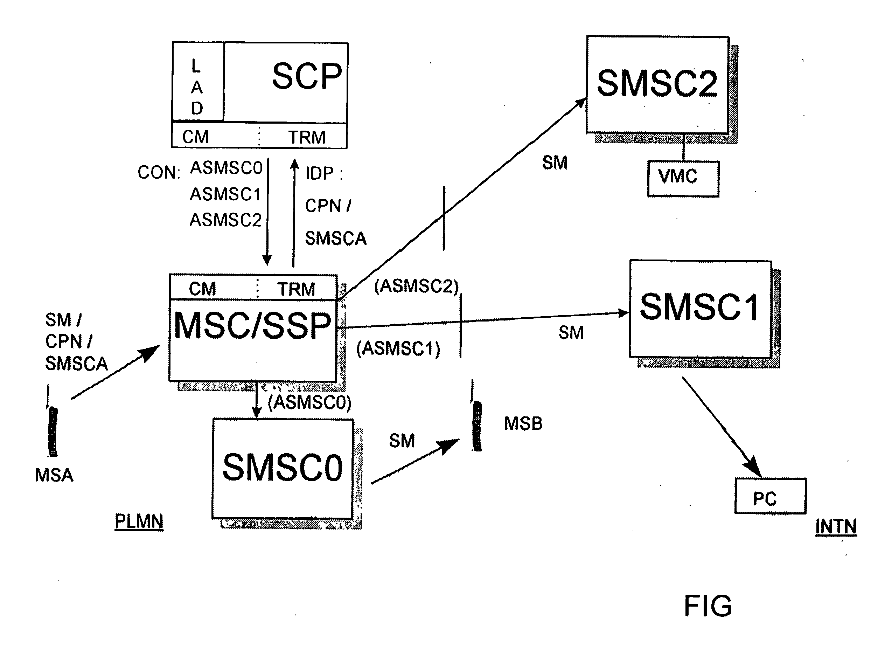

## Patentansprüche

1. Verfahren zur Steuerung eines Kurznachrichtendienstes in einem Mobil-Kommunikationssystem, bei dem an eine Zieladresse (CPN) gerichtete Kurznachrichten (SM) von einem Kommunikationsendgerät (MSA) eines mobilen Teilnehmers in ein Mobilfunknetz (PLMN) gesendet und zu einer für den mobilen Teilnehmer zuständigen Vermittlungseinrichtung (MSC) geroutet werden, und
ein Interworking der Vermittlungseinrichtung (MSC) mit Einrichtungen eines Intelligenten Netzes derart vorgesehen ist daß, eine Dienstevermittlungsstelle (SSP) des Intelligenten Netzes die Zieladresse (CPN) der Kurznachrichten (SM) an eine Dienstesteuerungsstelle (SCP) des Intelligentes Netzes sendet, **dadurch gekennzeichnet, daß** die Dienstesteuerungsstelle (SCP) die Zieladresse (CPN) auswertet und eine zur Behandlung des Kurznachrichtendienstes vorgesehene Diensteeinrichtung (SMSC0, SMSC1, SMSC2) auswählt.

2. Verfahren nach Anspruch 1,
**dadurch gekennzeichnet,**
**dass** von der Dienstesteuerungsstelle (SCP) eine Adresse (ASMSCO, ASMSC1, ASMSC2) zur Kennzeichnung der ausgewählten Diensteeinrichtung (SMSCO, SMSC1, SMSC2) an die Dienstevermittlungsstelle (SSP) rücksendet, die die Adresse (ASMSC0, ASMSC1, ASMSC2) auswertet und das Routen der Kurznachrichten (SM) zur ausgewählten Diensteeinrichtung (SMSC0, SMSC1, SMSC2) veranlasst.

3. Verfahren nach Anspruch 1 oder 2,
**dadurch gekennzeichnet,**
**dass** eine Liste (LAD) von Adressen der zur Behandlung des Kurznachrichtendienstes geeigneten Diensteeinrichtungen in der Dienstesteuerungsstelle (SCP) gespeichert wird.

4. Verfahren nach einem der vorhergehenden Ansprüche,
**dadurch gekennzeichnet,**
**dass** von der Dienstevermittlungsstelle (SSP) zu der Dienstesteuerungsstelle (SCP) mit der Zieladresse (CPN) der Kurznachrichten (SM) auch die Adresse (SMSCA) einer Diensteeinrichtung (SMSCA) mitgesendet wird und von der Dienstesteuerungsstelle (SCP) durch die Adresse (ASMSC0, ASMSC1, ASMSC2) der von ihr ausgewählten Diensteeinrichtung (SMSC0, SMSC1, SMSC2) ersetzt wird.

5. Verfahren nach Anspruch 4,
**dadurch gekennzeichnet,**
**dass** bei Aufenthalt des Kommunikationsendgeräts (MSA) in einem anderen Mobilfunknetz (PLMN) als dem Heimat-Mobilfunknetz des mobilen Teilnehmers die mit den Kurznachrichten (SM) mitgesandte Adresse (SMSCA) einer im Heimat-Mobilfunknetz betriebenen Diensteeinrichtung von der Dienstesteuerungsstelle (SCP) zur Vergebührung des Kurznachrichtendienstes benutzt wird.

6. Verfahren nach Anspruch 5,
**dadurch gekennzeichnet,**
**dass** bei Zugehörigkeit beider Mobilfunknetze zu einem Mobilfunknetzkonsortium die Adresse (SMSCA) der im Heimat-Mobilfunknetz betriebenen Diensteeinrichtung von der Dienstesteuerungsstelle (SCP) in die Adresse (z.B. ASMSC0) einer Diensteeinrichtung (z.B. SMSC0) des anderen Mobilfunknetzes umgesetzt wird, über die die Kurznachrichten (SM) geroutet werden.

7. Verfahren nach einem der Ansprüche 1 bis 3,
**dadurch gekennzeichnet,**
**dass** die Zieladresse (CPN) eine Internetadresse enthält, auf Grund der die Dienstesteuerungsstelle (SCP) eine Diensteeinrichtung (z.B. SMSC1) auswählt, durch die die Kurznachrichten (SM) in das Internet geroutet werden.

8. Verfahren nach einem der Ansprüche 1 bis 3,
**dadurch gekennzeichnet,**
**dass** anhand der Zieladresse (CPN) die Dienstesteuerungsstelle (SCP) eine Diensteeinrichtung (z.B. SMSC2) auswählt, durch die die Kurznachrichten (SM) zu einer Ansageeinrichtung (VMC) für die Umsetzung von Text in Sprache geroutet werden.

9. Mobil-Kommunikationssystem zur Steuerung eines Kurznachrichtendienstes, mit einem Kommunikationsendgerät (MSA) eines mobilen Teilnehmers, das an eine Zieladresse (CPN) gerichtete Kurznachrichten (SM) in ein Mobilfunknetz (PLMN) sendet, das eine für den mobilen Teilnehmer zuständige Vermittlungseinrichtung (MSC) zum Empfangen der Kurznachrichten (SM) aufweist, wobei;
die Vermittlungseinrichtung (MSC) mit Einrichtungen eines Intelligenten Netzes derart gekoppelt ist, dass eine Dienstevermittlungsstelle (SSP) der Intelligenten Netzen Sende- und Empfangsmittel (TRM) zum Empfangen der Zieladresse (CPN) der Kurznachrichten (SM) von der Vermittlungseinrichtung (MSC) und zum Senden der Zieladresse (CPN) an eine Dienstesteuerungsstelle (SCP) des Intelligenten Netzes aufweist, **dadurch gekennzeichnet daß** die Dienstesteuerungsstelle (SCP) Steuermittel (CM) zur Auswertung der Zieladresse (CPN) und zur Auswahl einer für die Behandlung des Kurznachrichtendienstes vorgesehenen Diensteeinrichtung (SMSC0, SMSC1, SMSC2) aufweist.

## Claims

1. Method for control of a short message service in a mobile communication system, in which short messages (SM) of a mobile station (MSA) of a mobile subscriber directed to a called party number (CPN) are sent in a public land mobile network (PLMN) and are routed to a mobile switching center (MSC) responsible for the mobile subscriber, and
interworking of the mobile switching center (MSC) with devices of an intelligent network is provided such that a service switching point (SSP) of the intelligent network sends the called party number (CPN) of the short messages (SM) to a service control point (SCP) of the intelligent network,
**characterized in that**,
the service control point (SCP) evaluates the called party number (CPN) and selects a service center (SMSCO, SMSC1, SMSC2) provided for handling of the short message service.

2. Method according to claim 1,
**characterized in that**,
an address (ASMSCO, ASMSC1, ASMSC2) for identifying the selected service center (SMSCO, SMSC1, SMSC2) is returned by the service control point (SCP) to the service switching point (SSP), which evaluates the address (ASMSCO, ASMSC1, ASMSC2) and initiates the routing of the short messages (SM) to the selected service center (SMSCO, SMSC1, SMSC2).

3. Method according to claim 1 or 2,
**characterized in that**,
a list (LAD) of addresses of the service centers suitable for handling the short message service is stored in the service control point (SCP).

4. Method according to one of the previous claims,
**characterized in that**,
the service switching point (SSP) also sends to the service control point (SCP) along with the called party number (CPN) of the short messages (SM) the address (SMSCA) of a service center (SMSCA) and the service control point (SCP) replaces it with the address (ASMSCO, ASMSC1, ASMSC2) of the service center (SMSCO, SMSC1, SMSC2) which it has selected.

5. Method according to claim 4,
**characterized in that**,
if the mobile station (MSA) is located in a public land mobile network (PLMN) other than the home mobile network of the mobile subscriber, the address (SMSCA) of a service center operated in the home mobile network sent along with the short messages (SM) is used by the service control point (SCP) for billing the short message service.

6. Method according to claim 5,
**characterized in that**,
if the two mobile networks belong to a mobile network consortium, the address (SMSCA) of the control center operated in the home mobile network is converted by the service control point (SCP) into the address (e.g. ASMSC0) of a service center (e.g. SMSC0) of the other mobile network via which the short messages (SM) are routed.

7. Method according to one of the claims 1 to 3,
**characterized in that**,
the called party number (CPN) contains an Internet address, on the basis of which the service control point (SCP) selects a service center (e.g. SMSC1), by which the short messages (SM) will be routed into the Internet.

8. Method according to one of the claims 1 to 3,
**characterized in that**,
on the basis of the called party number (CPN), the service control point (SCP) selects a service center (e.g. SMSC2) through which the short messages (SM) are routed to a voice mail center (VMC) for conversion of text into speech.

9. Mobile communication system for control of a short message service, with a mobile station (MSA) of a mobile subscriber, which sends short messages (SM) directed to a called party number (CPN) in a public land mobile network (PLMN), which features a mobile switching center (MSC) responsible for the mobile subscriber for receiving the short messages (SM) with the mobile switching center (MSC) being coupled to devices of an intelligent network such that a service switching point (SSP) of the intelligent network features transmit and receive means (TRM) for receiving the called party number (CPN) of the short messages (SM) from the mobile switching center (MSC) and for transmitting the called party number (CPN) to a service control point (SCP) of the intelligent network,
**characterized in that**,
the service control point (SCP) features control means (CM) for evaluation of the called party number (CPN) and for selection of a service unit (SMSCO, SMSC1, SMSC2) provided for handling the short message service.

## Revendications

1. Procédé pour gérer un service de messages courts dans un système de communication mobile, dans lequel des messages courts (SM) adressés à une adresse cible (CPN) sont envoyés par un terminal de communication (MSA) d'un abonné mobile à un réseau de téléphonie mobile (PLMN) et sont routés vers un dispositif de commutation (MSC) compétent pour l'abonné mobile et un interfonctionnement du dispositif de commutation (MSC) avec des équipements d'un réseau intelligent est prévu de telle sorte qu'un centre de commutation de services (SSP) du réseau intelligent envoie l'adresse cible (CPN) des messages courts (SM) à un centre de gestion de services (SCP) du réseau intelligent, **caractérisé en ce que** le centre de gestion de services (SCP) analyse l'adresse cible (CPN) et sélectionne un équipement de service (SMSCO, SMSC1, SMSC2) prévu pour le traitement du service de messages courts.

2. Procédé selon la revendication 1, **caractérisé en ce que**
le centre de gestion de services (SCP) renvoie une adresse (ASMSCO, ASMSC1, ASMSC2) pour l'identification de l'équipement de service (SMSCO, SMSC1, SMSC2) sélectionné au centre de commutation de services (SSP) qui analyse l'adresse (ASMSCO, ASMSC1, ASMSC2) et ordonne le routage des messages courts (SM) vers l'équipement de service (SMSCO, SMSC1, SMSC2) sélectionné.

3. Procédé selon la revendication 1 ou 2, **caractérisé en ce que**
une liste (LAD) d'adresses des équipements de service appropriés pour le traitement du service de messages courts est stockée au centre de gestion de services (SCP).

4. Procédé selon l'une quelconque des revendications précédentes, **caractérisé en ce que**
le centre de commutation de services (SSP) envoie au centre de gestion de services (SCP) en même temps que l'adresse cible (CPN) des messages courts (SM) également l'adresse (SMSCA) d'un équipement de service (SMSCA) et le centre de gestion de services (SCP) la remplace par l'adresse (ASMSCO, ASMSC1, ASMSC2) de l'équipement de service (SMSCO, SMSC1, SMSC2) qu'il a sélectionnée.

5. Procédé selon la revendication 4, **caractérisé en ce que**, en cas de séjour du terminal de communication (MSA) dans un réseau de téléphonie mobile (PLMN) autre que le réseau de téléphonie mobile de domicile de l'abonné mobile, l'adresse (SMSCA), envoyée en même temps que les messages courts (SM), d'un équipement de service exploité dans le réseau de téléphonie mobile de domicile est utilisée par le centre de gestion de services (SCP) pour la taxation du service de messages courts.

6. Procédé selon la revendication 5, **caractérisé en ce que**, en cas d'appartenance des deux réseaux de téléphonie mobile à un groupe de réseaux de téléphonie mobile, l'adresse (SMSCA) de l'équipement de service exploité dans le réseau de téléphonie mobile de domicile est convertie par le centre de gestion de services (SCP) dans l'adresse (par exemple ASMSC0) d'un équipement de service (par exemple SMSC0) de l'autre réseau de téléphonie mobile, par lequel les messages courts (SM) sont routés.

7. Procédé selon l'une quelconque des revendications 1 à 3,
**caractérisé en ce que**
l'adresse cible (CPN) contient une adresse Internet sur la base de laquelle le centre de gestion de services (SCP) sélectionne un équipement de service (par exemple SMSC1) par lequel les messages courts (SM) sont routés sur Internet.

8. Procédé selon l'une quelconque des revendications 1 à 3,
**caractérisé en ce que**,
à l'aide de l'adresse cible (CPN), le centre de gestion de services (SCP) sélectionne un équipement de service (par exemple SMSC2) par lequel les messages courts (SM) sont routés vers un dispositif d'annonce (VMC) pour la conversion de texte en parole.

9. Système de communication mobile pour la gestion d'un service de messages courts avec un terminal de communication (MSA) d'un abonné mobile, qui envoie des messages courts (SM) adressés à une adresse cible (CPN) dans un réseau de téléphonie mobile (PLMN), qui présente un dispositif de commutation (MSC) compétent pour l'abonné mobile pour la réception des messages courts (SM), le dispositif de commutation (MSC) étant couplé avec des équipements d'un réseau intelligent de telle sorte qu'un centre de commutation de services (SSP) du réseau intelligent présente des moyens d'émission et de réception (TRM) pour la réception de l'adresse cible (CPN) des messages courts (SM) du dispositif de commutation (MSC) et pour l'envoi de l'adresse cible (CPN) à un centre de gestion de services (SCP) du réseau intelligent, **caractérisé en ce que** le centre de gestion de services (SCP) présente des moyens de gestion (CM) pour l'analyse de l'adresse cible (CPN) et pour le choix d'un équipement de service (SMSCO, SMSC1, SMSC2) prévu pour le traitement du service de messages courts.
